# EUROPÄISCHE PATENTANMELDUNG

(11) **EP 2 787 404 A1**
(43) Veröffentlichungstag der Anmeldung: **08.10.2014**
(21) Anmeldenummer: 13162373.8
(22) Anmeldetag: 04.04.2013
(51) Int. Cl.: G05B 19/042, H04L 12/40

(54) **Verfahren zum Betreiben eines dezentralen Peripheriesystems**

(71) Anmelder: Siemens Aktiengesellschaft, 80333 München (DE)
(72) Erfinder: Maier, Willi, 77728 Oppenau (DE); Pfatteicher, Werner, 76327 Pfinztal (DE); Rottmann, Norbert, 76829 Landau (DE)

(57) **Zusammenfassung**

Die Erfindung betrifft ein Verfahren zum Betreiben eines dezentralen Peripheriesystems mit mindestens zwei Peripheriebaugruppen (Pe4, Pe5), die in einem mehrere Peripheriebaugruppen aufweisenden Peripheriegerät (4, 5) oder jeweils in einem von zwei derartigen Peripheriegeräten (4, 5) angeordnet sind, wobei ein Automatisierungsgerät (3) an das oder die Peripheriegeräte (4, 5) über einen Bus (8) anschließbar ist und ein Feldgerät (7) in Form eines Sensors oder Aktors redundant an die beiden Peripheriebaugruppen (Pe4, Pe5) angeschlossen ist, die jeweils während eines Peripheriebaugruppen-Zyklus dem Feldgerät (7) Daten übermitteln oder von diesem Daten empfangen. Es werden Maßnahmen vorgeschlagen, mittels welcher eine einfache Ausfallerkennung der Peripheriebaugruppen (Pe4, Pe5) ermöglicht wird.

## Beschreibung

Die Erfindung betrifft ein Verfahren zum Betreiben eines dezentralen Peripheriesystems mit mindestens zwei Peripheriebaugruppen, die in einem mehrere Peripheriebaugruppen aufweisenden Peripheriegerät oder jeweils in einem von zwei derartigen Peripheriegeräten angeordnet sind, wobei ein Automatisierungsgerät an das oder die Peripheriegeräte über einen Bus anschließbar ist und ein Feldgerät in Form eines Sensors oder Aktors redundant an die beiden Peripheriebaugruppen angeschlossen ist, die jeweils während eines Peripheriebaugruppen-Zyklus dem Feldgerät Daten übermitteln oder von diesem Daten empfangen. Darüber hinaus betrifft die Erfindung ein Automatisierungssystem, welches zur Durchführung des Verfahrens geeignet ist.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Diese H-Systeme weisen gewöhnlich zwei mehrere Baugruppen aufweisende Automatisierungsgeräte auf, wobei auf die an die Automatisierungsgeräte angeschlossenen mit mehreren Peripheriebaugruppen versehenen Peripherieeinheiten beide Automatisierungsgeräte lesend und/oder schreibend zugreifen können. Eines der beiden Automatisierungsgeräte ist bezüglich der an das System angeschlossenen Peripherieeinheiten führend. Dies bedeutet, dass Ausgaben zu den Peripherieeinheiten bzw. Ausgangsinformationen für diese Peripherieeinheiten nur von einem der beiden Automatisierungsgeräte durchgeführt werden, welches als Master arbeitet bzw. die Masterfunktion übernommen hat. Damit beide Automatisierungsgeräte synchron ablaufen können, werden diese in regelmäßigen Abständen synchronisiert.

Häufig ist es auch erwünscht, zwei Peripheriebaugruppen einer Peripherieeinheit oder zwei Peripheriebaugruppen von zwei derartigen Peripherieeinheiten redundant zu betreiben, wobei ein Sensor oder Aktor redundant an die jeweilige (Partner- )Peripheriebaugruppe angeschlossen ist und die Peripherieeinheiten über einen Bus mit einem mehrere Baugruppen aufweisenden Automatisierungsgerät in Form eines Zentral- oder Erweiterungsgeräts verbunden sind. Ein derartiges System ist z. B. aus dem Siemens-Katalog ST 70, Kapitel 8, Ausgabe 2012 bekannt. Ein Ausfall einer dieser Peripheriebaugruppen kann nur mittels einer geeigneten übergeordneten "Library-Software" erkannt werden, wodurch geeignete Reaktionen beispielsweise im Rahmen einer Sollwertkorrektur nur zeitverzögert erfolgen. Die Peripheriebaugruppen verfügen über keine Informationen über deren redundante Verschaltung.

Der Erfindung liegt die Aufgabe zugrunde, ein Verfahren der eingangs genannten Art anzugeben, mittels welchem eine einfache Ausfallerkennung der Peripheriebaugruppen ermöglicht wird. Darüber hinaus ist ein dezentrales Peripheriesystem zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des dezentralen Peripheriesystems durch die im kennzeichnenden Teil des Anspruchs 6 angegebenen Maßnahmen gelöst.

Vorteilhaft ist, dass im Hinblick auf die Ausfallerkennung der jeweiligen Partner-Peripheriebaugruppen (der Ausfallerkennung des Masters und des Slaves) diese Baugruppen sich gegenseitig überwachen. Während des Master- bzw. Slave-Zyklus tauschen der Master und der Slave Informationen aus, wobei ferner während eines derartigen Zyklus der Master und der Slave auf das Feldgerät zugreifen. Für den Fall, dass das Feldgerät als Sensor ausgebildet ist, übermittelt der Sensor dem Master und dem Slave Prozesseingangsdaten (Lesezugriff) und für den Fall, dass das Feldgerät als Aktor ausgestaltet ist, führen der Master und der Slave dem Aktor Prozessausgangsdaten zu (Schreibzugriff).

In einer Ausgestaltung der Erfindung gemäß den im Anspruch 2 angegebenen Maßnahmen wird der Slave-Zyklus zeitlich an den Master-Zyklus herangeführt, was ein "Aufsynchronisieren" der beiden Peripheriebaugruppen bedeutet.

Gemäß den im Anspruch 3 angegebenen Maßnahmen wird nach dem Aufsynchronisieren der synchronisierte Betrieb aufrechterhalten.

In einer weiteren Ausgestaltung der Erfindung gemäß den im Anspruch 4 angegeben Maßnahmen wird sichergestellt, dass der Slave einen unsynchronisierten Slave-Zyklus startet, falls dieser während vorgegebener Slave-Zeitintervalle die vorgesehenen Master-Synchronisationsanforderungen nicht empfangen hat.

Ferner wird gemäß den im Anspruch 5 angegeben Maßnahmen sichergestellt, dass der Master einen unsynchronisierten Master-Zyklus startet, falls der Master während vorgegebener Master-Zeitintervalle die vorgesehenen Slave-Synchronisationsquittungen nicht empfangen hat.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen
- Figur 1: Bestandteile eines Automatisierungssystems,
- Figuren 2 und 3: Master- und Slave-Verfahrensschritte.

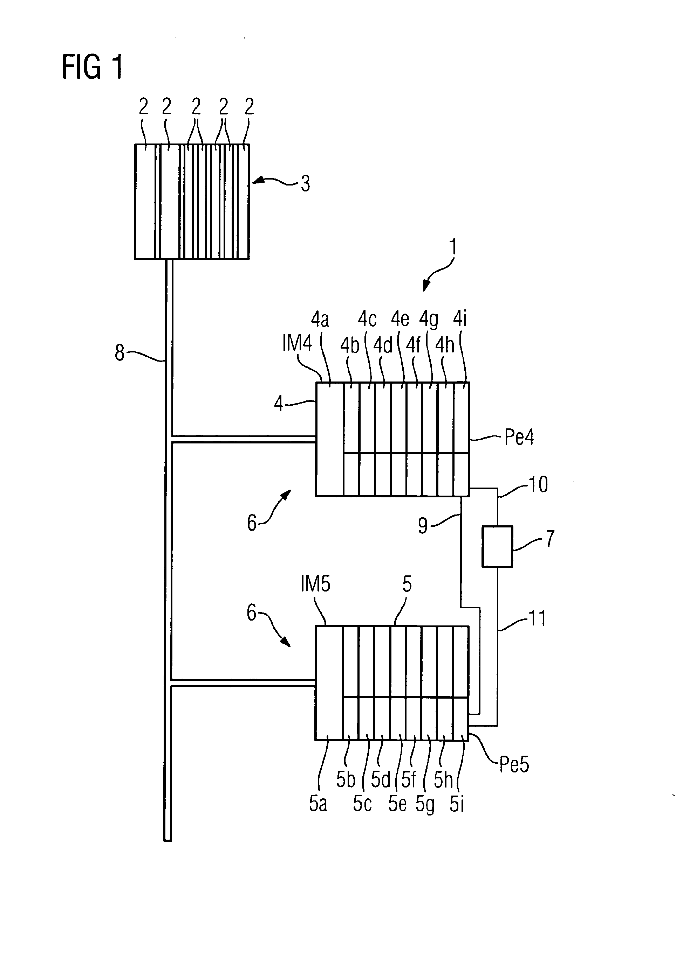

In der Figur 1 ist mit 1 ein Automatisierungssystem bezeichnet, welches zur Steuerung eines technischen Prozesses oder einer Anlage vorgesehen ist. Bestandteile dieses Automatisierungssystems 1 sind im vorliegenden Ausführungsbeispiel ein mehrere Baugruppen 2 aufweisendes Automatisierungsgerät 3, ein zwei Peripheriegeräte 4, 5 aufweisendes dezentrales Peripheriesystem 6 sowie ein Sensor 7. Die Peripheriegeräte 4, 5 sind jeweils versehen mit mehreren Peripheriebaugruppen 4a, 4b, ..., 5a, 5b, ... , wobei eine dieser Peripheriebaugruppen 4a, 5a der jeweiligen Peripheriegeräte 4, 5 als Anschaltbaugruppe IM4, IM5 ausgebildet ist. Diese Anschaltbaugruppen IM4, IM5 sind zum Anschluss an einen für hohe Kommunikationsgeschwindigkeiten ausgelegten dezentralen Feldbus 8 vorgesehen, beispielsweise an einen an sich bekannten Feldbus "PROFIBUS DP". Darüber hinaus greifen diese Anschaltbaugruppen IM4, IM5 lesend und/oder schreibend auf die Peripheriebaugruppen 4a, 4b, ..., 5a, 5b, ... zu. Einerseits werden im Rahmen eines Lesezugriffs die von den als Eingabebaugruppen ausgebildeten Peripheriebaugruppen bereitgestellten Prozesseingangsdaten (Istwerte) der Sensoren eingelesen und von den Anschaltbaugruppen IM4, IM5 dem Automatisierungsgerät 3 übermittelt, andererseits werden im Rahmen eines Schreibzugriffs die von dem Automatisierungsgerät 3 den Anschaltbaugruppen IM4, IM5 zugeführten Prozessausgangsdaten (Sollwerte) den als Ausgabebaugruppen ausgebildeten Peripheriebaugruppen zur Ansteuerung von Aktoren weitergeleitet. Die Baugruppen 2 des Automatisierungsgerätes 3, z. B. Baugruppen in Form von CPU-, Regler- und/oder Ein-/Ausgabe- und/oder sonstigen Funktions-Baugruppen, sowie die Peripheriebaugruppen der Peripheriegeräte 4, 5 sind jeweils über einen hier nicht dargestellten Rückwandbus verbunden.

Selbstverständlich kann das Automatisierungssystem 1 je nach einer zu lösenden Steuerungsaufgabe mit weiteren Automatisierungsgeräten und/oder dezentralen Peripheriegeräten versehen sein. Darüber hinaus kann das Automatisierungssystem 1 über einen hier nicht dargestellten Bus mit Engineeringsystemen, Bedien- und Beobachtungssystemen, Asset-Management-Systemen und/oder für ein Prozessleitsystem geeigneten Servern verbunden sein.

Um zwei Peripheriebaugruppen eines der beiden Peripheriegeräte 4, 5 oder eine Peripheriebaugruppe des Peripheriegerätes 4 mit einer Peripheriebaugruppe des Peripheriegerätes 5 redundant betreiben zu können, werden die beiden Peripheriebaugruppen zunächst über eine Synchronisationsleitung 9 gekoppelt und ein Sensor 7 redundant an diese beiden Peripheriebaugruppen angeschlossen. Im vorliegenden Ausführungsbeispiel sind die als Prozesseingabebaugruppen Pe4, Pe5 ausgebildeten Peripheriebaugruppen 4i, 5i über die Synchronisationsleitung 9 miteinander verbunden und der Sensor 7 über Leitungen 10, 11 redundant an diese beiden Prozesseingabebaugruppen Pe4, Pe5 angeschlossen. Dabei wird angenommen, dass die Prozesseingabebaugruppe Pe4 als Master M und die Prozesseingabebaugruppe Pe5 als Slave S parametriert sind, wobei diese Parametrierung während einer Parametrierungsphase mittels des Automatisierungsgerätes 3 oder eines hier nicht dargestellten Engineerings-Systems erfolgt. Während dieser Phase werden geeignete Parameter den Anschaltbaugruppen IM4, IM5 übermittelt, mittels derer die Peripheriebaugruppen 4a, 4b, ..., 5a, 5b, ... während Peripheriegeräte-Zyklen parametriert werden. Ein Kommunikationszyklus des für hohe Kommunikationsgeschwindigkeiten ausgelegten Feldbusses 8 ist selbstverständlich kürzer als die Peripheriegeräte-Zyklen, so dass alle an diesen Bus angeschlossenen Einheiten in Echtzeit Informationen austauschen können. Entsprechend sind Master- und Slave-Zyklen, während derer der Master M und der Slave S Sensordaten empfangen, länger als die Peripheriegeräte-Zyklen, weil während dieser Peripheriegeräte-Zyklen jede der Peripheriebaugruppen Informationen mit den Anschaltbaugruppen IM4, IM5 austauscht.

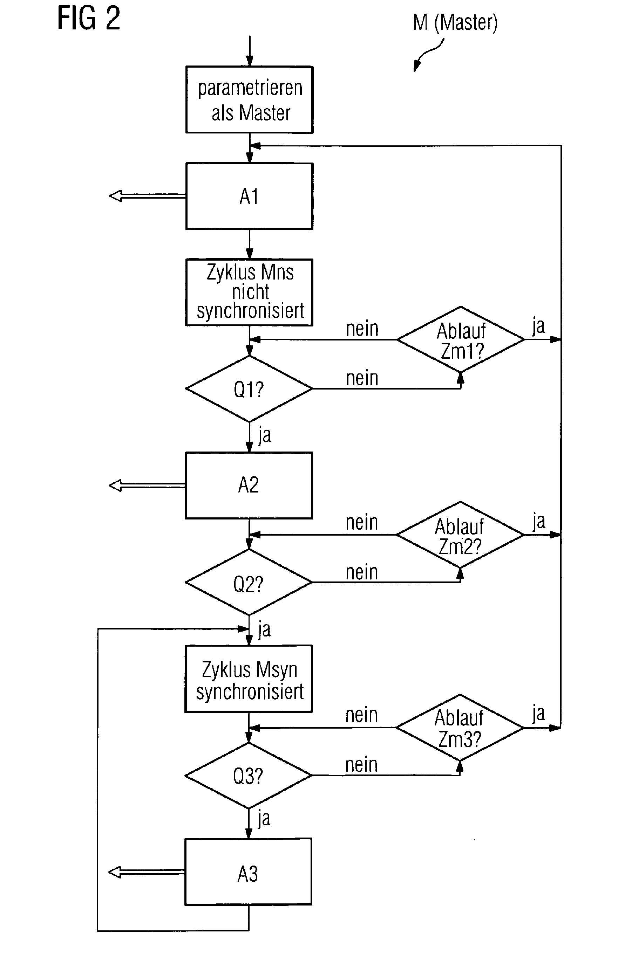

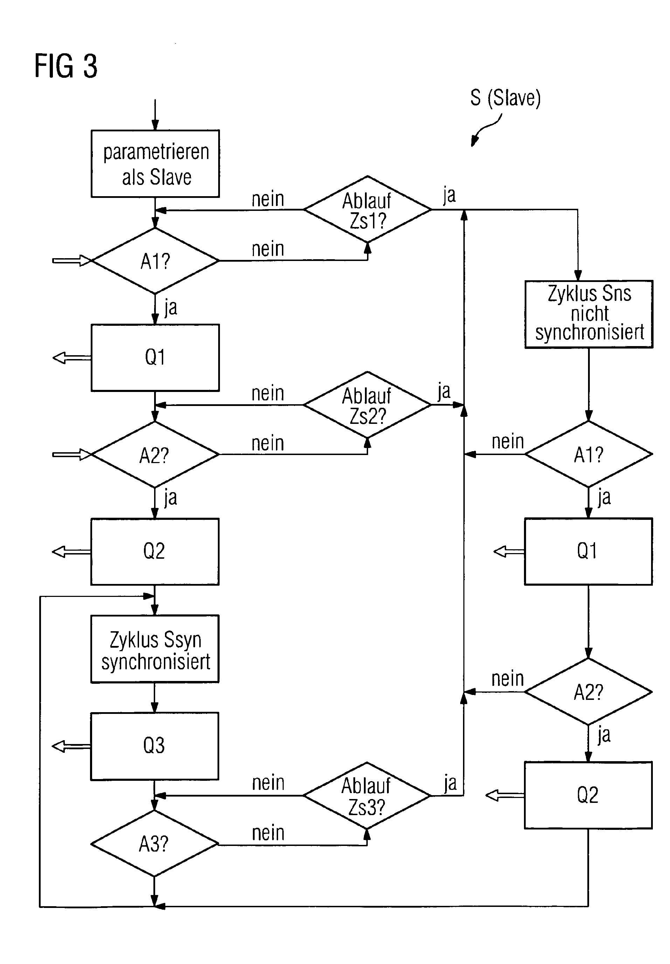

Anhand der Figuren 2 und 3 werden im Folgenden Verfahrensabläufe zur Erkennung eines Master- oder Slave-Ausfalls, Verfahrensabläufe zum Aufsynchronisieren sowie Verfahrensabläufe zum Synchronisieren der Master- und Slave-Zyklen näher erläutert.
Nach dem Parametrieren der Peripheriebaugruppe Pe4 als Master M und der Peripheriebaugruppe Pe5 als Slave S übermittelt der Master M dem Slave S eine erste Master-Synchronisationsanforderung A1 und startet unmittelbar nach dieser Übermittlung einen mit dem Slave S unsynchronisierten bzw. nicht synchronisierten Lesezyklus zum Lesen von Daten des Sensors 7, was in Figur 2 als "Zyklus Mns" bezeichnet ist und im Folgenden als unsynchronisierter Master-Zyklus bezeichnet wird. Der Master M führt weitere derartige unsynchronisierte Master-Zyklen Mns aus, falls der Master M während jeweils eines ersten Master-Zeitintervalls Zm1 die erste Slave-Synchronisationsquittung Q1 nicht empfängt.

Für den Fall, dass der Slave S diese erste Master-Synchronisationsanforderung A1 während eines ersten Slave-Zeitintervalls Zs1 empfängt - was dem Slave S anzeigt, dass der Master M in Betrieb bzw. vorhanden ist - antwortet der Slave S dem Master M mittels einer ersten Slave-Synchronisationsquittung Q1, wodurch dem Master M der Betrieb des Slaves S angezeigt wird.

Falls der Slave S die erste Master-Synchronisationsanforderung A1 während des ersten Slave-Zeitintervalls Zs1 nicht empfangen hat, so weist dies auf einen ausgefallenen bzw. nicht vorhandenen Master M hin und der Slave S startet in diesem Fall einen mit dem Master M unsynchronisierten bzw. nicht synchronisierten Lesezyklus zum Lesen der Sensordaten, was im Folgenden als unsynchronisierter Slave-Zyklus bezeichnet wird und in Figur 3 als "Zyklus Sns" bezeichnet ist.

Es wird im Folgenden davon ausgegangen, dass der Master M während des ersten Master-Zeitintervalls Zm1 die erste Slave-Synchronisationsquittung Q1 empfangen hat. In diesem Fall übermittelt der Master M dem Slave S eine zweite Master-Synchronisationsanforderung A2 und wartet während eines zweiten Master-Zeitintervalls Zm2 auf eine zweite Synchronisationsquittung Q2 des Slaves S. Diese zweite Synchronisationsquittung Q2 übermittelt der Slave S dem Master M für den Fall, dass der Slave S während eines zweiten Slave-Zeitintervalls Zs2 die zweite Master-Synchronisationsanforderung A2 empfangen hat, wobei der Slave S nach der Übermittlung dieser zweiten Synchronisationsquittung Q2 einen Lesezyklus startet. Dieser Lesezyklus ist mit einem Lesezyklus des Masters M dann synchronisiert, falls der Master M während eines zweiten Master-Zeitintervalls Zm2 die zweite Slave-Synchronisationsquittung Q2 empfangen hat. Diese Lesezyklen - im Folgenden im Hinblick auf den Master M als Msyn (Figur 2) und im Hinblick auf den Slave S als Ssyn (Figur 3) bezeichnet, erfolgen synchronisiert, falls einerseits der Master M während eines jeweiligen dritten Zeitintervalls Zm3 jeweils eine dritte Synchronisationsquittung Q3 empfängt und anderseits der Slave S während eines dritten Slave-Zeitintervalls Zs3 eine dritte Master-Synchronisationsanforderung A3 empfängt. Dabei übermittelt der Slave S zunächst dem Master M unmittelbar nach einem Lesezyklus Ssyn die dritte Synchronisationsquittung Q3 und der Master M dem Slave S unmittelbar nach Empfang dieser dritten Synchronisationsquittung Q3 die dritte Master-Synchronisationsanforderung A3.

Die dritten Master- und Slave-Zeitintervalle Zm3, Zs3, welche dem ersten Master-Zeitintervall Zm1 entsprechen, sind so gewählt, dass die Partner-Peripheriebaugruppen, also der Master M und der Slave S möglichst schnell erkennen, ob die jeweilige Partner-Peripheriebaugruppe noch vorhanden bzw. noch betriebsbereit ist. Die jeweiligen Zeitintervalle Zm1, Zm3 und Zs3 entsprechen der Summe aus der zweifachen Übertragungszeit der jeweiligen Synchronisationsinformation (Master-Synchronisationsanforderung, Slave-Synchronisationsquittung), der zweifachen maximalen Reaktionszeit auf den Empfang einer Synchronisationsinformation und einer Toleranzzuschlagszeit.

Die zweiten Master- und Slave-Zeitintervalle Zm2, Zs2 sind dagegen so gewählt, dass Master M und Slave S sich aufsynchronisieren können. Die jeweiligen Zeitintervalle Zm2, Zs2 entsprechen der Summe aus der zweifachen Übertragungszeit der jeweiligen Synchronisationsinformation (Master-Synchronisationsanforderung, Slave-Synchronisationsquittung), der zweifachen maximalen Reaktionszeit auf den Empfang einer Synchronisationsinformation, der maximalen Master- bzw. Slave-Zykluszeit und einer Toleranzzuschlagszeit.

Das erste Slave-Zeitintervall Zs1 ist größer als ein Slave-Zyklus gewählt, wobei dieses Zeitintervall einer Slave-Wartezeit entspricht, während der der Slave S aufgrund der Master-Synchronisationsanforderung A1 erkennen kann, ob der Master M überhaupt betriebsbereit bzw. vorhanden ist bzw. ob eine Peripheriebaugruppe überhaupt als Master parametriert ist.

In den Fällen, in denen der Master M während der Master-Zeitintervalle Zm1, Zm2, Zm3 nicht die entsprechenden Slave-Synchronisationsquittungen Q1, Q2, Q3 empfängt, übermittelt der Master M dem Slave S jeweils die erste Synchronisationsanforderung A1 und startet jeweils den unsynchronisierten Lesezyklus Mns. In diesen Fällen ist der Slave S ausgefallen.

In den Fällen, in denen der Slave S während der Slave-Zeitintervalle Zs1, Zs2, Zs3 nicht die entsprechenden Master-Synchronisationsanforderungen A1, A2, A3 empfängt, was auf einen Ausfall des Masters M hinweist, startet der Slave S jeweils einen unsynchronisierten Lesezyklus Sns. Nach einem derartigen unsynchronisierten Lesezyklus Sns überwacht der Slave S den Empfang zunächst der ersten Master-Synchronisationsanforderung A1 und dann - falls der Slave S diese empfangen hat - den Empfang der zweiten Master-Synchronisationsanforderung A2. Für den Fall, dass der Slave S die jeweilige Anforderung A1, A2 empfangen hat, führt der Slave S jeweils die erste und die zweite Slave-Synchronisationsquittung Q1, Q2 dem Master M zu und startet schließlich - wie beschrieben - den synchronisierten Lesezyklus Ssyn.

## Patentansprüche

1. Verfahren zum Betreiben eines dezentralen Peripheriesystems mit mindestens zwei Peripheriebaugruppen (Pe4, Pe5), die in einem mehrere Peripheriebaugruppen aufweisenden Peripheriegerät (4, 5) oder jeweils in einem von zwei derartigen Peripheriegeräten (4, 5) angeordnet sind, wobei ein Automatisierungsgerät (3) an das oder die Peripheriegeräte (4, 5) über einen Bus (8) anschließbar ist und ein Feldgerät (7) in Form eines Sensors oder Aktors redundant an die beiden Peripheriebaugruppen (Pe4, Pe5) angeschlossen ist, die jeweils während eines Peripheriebaugruppen-Zyklus lesend und/oder schreibend auf das Feldgerät (7) zugreifen, **dadurch gekennzeichnet, dass**
a) eine der mindestens zwei Peripheriebaugruppen (Pe4, Pe5) als Master (M) und die andere als Slave (S) parametriert wird und der Master (M) und der Slave (S) zur Übertragung von Synchronisationsinformationen mittels einer Synchronisationsleitung (9) verbunden werden,
b) eine Synchronisation des Masters (M) mit dem Slave (S) mittels einer ersten Master-Synchronisationsanforderung eingeleitet wird, wobei zunächst dem Slave (S) eine erste Master-Synchronisationsanforderung übermittelt und anschließend ein unsynchronisierter Masterzyklus gestartet wird, und
c) für den Fall, dass der Slave (S) die erste Master-Synchronisationsanforderung während eines ersten Slave-Zeitintervalls empfangen hat, mittels einer ersten Slave-Synchronisationsquittung dem Master (M) geantwortet wird.

2. Verfahren nach Anspruch 1, **dadurch gekennzeichnet, dass**
d) für den Fall, dass der Master (M) während eines ersten Master-Zeitintervalls die erste Slave-Synchronisationsquittung empfangen hat, dem Slave (S) eine zweite Master-Synchronisationsanforderung übermittelt wird, und
e) für den Fall, dass der Slave (S) die zweite Master-Synchronisationsanforderung während eines zweiten Slave-Zeitintervalls empfangen hat, mittels einer zweiten Slave-Synchronisationsquittung dem Master (M) geantwortet und ein synchronisierter Slave-Zyklus gestartet wird.

3. Verfahren nach Anspruch 2, **dadurch gekennzeichnet, dass**
- nach dem synchronisierten Slave-Zyklus eine dritte Slave-Synchronisationsquittung dem Master (M) übermittelt wird,
- für den Fall, dass der Master (M) während eines zweiten Master-Zeitintervalls die zweite Slave-Synchronisationsquittung empfangen hat, ein synchronisierter Masterzyklus gestartet wird,
- für den Fall, dass der Master (M) während jeweils eines dritten Master-Zeitintervalls jeweils die dritte Slave-Synchronisationsquittung empfangen hat, zunächst jeweils eine dritte Master-Synchronisationsanforderung dem Slave (S) übermittelt und anschließend jeweils ein weiterer synchronisierter Masterzyklus gestartet wird, und
- für den Fall, dass der Slave (S) jeweils während eines dritten Slave-Zeitintervalls jeweils die dritte Master-Synchronisationsanforderung empfangen hat, zunächst jeweils ein weiterer synchronisierter Slave-Zyklus gestartet und anschließend jeweils die dritte Slave-Synchronisationsquittung dem Master (M) übermittelt wird.

4. Verfahren nach Anspruch 3, **dadurch gekennzeichnet, dass** ein unsynchronisierter Slave-Zyklus gestartet wird, falls der Slave (S)
- während des ersten Slave-Zeitintervalls die erste Master-Synchronisationsanforderung oder
- während des zweiten Slave-Zeitintervalls die zweite Master-Synchronisationsanforderung oder
- während des dritten Slave-Zeitintervalls die dritte Master-Synchronisationsanforderung
nicht empfangen hat.

5. Verfahren nach Anspruch 3, **dadurch gekennzeichnet, dass** ein unsynchronisierter Master-Zyklus gestartet wird, falls der Master (M)
- während des ersten Master-Zeitintervalls die erste Slave-Synchronisationsquittung oder
- während des zweiten Master-Zeitintervalls die zweite Slave-Synchronisationsquittung oder
- während des dritten Master-Zeitintervalls die dritte Slave-Synchronisationsquittung
nicht empfangen hat.

6. Dezentrales Peripheriesystem mit mindestens zwei Peripheriebaugruppen (Pe4, Pe5), welche in einem mehrere Peripheriebaugruppen aufweisenden Peripheriegerät (4, 5) oder jeweils in einem von zwei derartigen Peripheriegeräten (4, 5) angeordnet sind, wobei ein Automatisierungsgerät (3) an das oder die Peripheriegeräte (4, 5) über einen Bus (8) anschließbar ist, und ein Feldgerät (7) in Form eines Sensors oder Aktors redundant an die beiden Peripheriebaugruppen (Pe4, Pe5) angeschlossen ist, die jeweils während eines Peripheriebaugruppen-Zyklus lesend und/oder schreibend auf das Feldgerät zugreifen, **dadurch gekennzeichnet, dass**
- eine der mindestens zwei Peripheriebaugruppen (Pe4, Pe5) als Master (M) und die andere als Slave (S) parametriert ist und der Master (M) und der Slave (S) zur Übertragung von Synchronisationsinformationen mittels einer Synchronisationsleitung (9) verbunden sind,
- der Master (M) dazu ausgebildet ist, die Synchronisation mit dem Slave (S) mittels einer ersten Master-Synchronisationsanforderung einzuleiten, wobei der Master (M) dem Slave (S) zunächst eine erste Master-Synchronisationsanforderung übermittelt und anschließend einen ersten Master-Zyklus startet,
- der Slave (S) dazu ausgebildet ist, für den Fall, dass der Slave (S) während eines ersten Slave-Zeitintervalls die erste Master-Synchronisationsanforderung empfangen hat, auf die erste Master-Synchronisationsanforderung des Masters (M) mittels einer ersten Slave-Synchronisationsquittung zu antworten.

7. Peripheriesystem nach Anspruch 6, **dadurch gekennzeichnet, dass**
- der Master (M) ferner dazu ausgebildet ist, für den Fall, dass dieser während eines ersten Zeitintervalls die erste Slave-Synchronisationsquittung empfangen hat, dem Slave (S) eine zweite Master-Synchronisationsanforderung zu übermitteln,
- der Slave (S) ferner dazu ausgebildet ist, für den Fall, dass dieser die zweite Master-Synchronisationsanforderung während eines zweiten Slave-Zeitintervalls empfangen hat, mittels einer zweiten Slave-Synchronisationsquittung dem Master (M) zu antworten und einen synchronisierten Slave-Zyklus zu starten.

8. Peripheriesystem nach Anspruch 7, **dadurch gekennzeichnet, dass**
- der Slave (S) ferner dazu ausgebildet ist, nach dem synchronisierten Slave-Zyklus dem Master (M) eine weitere Slave-Synchronisationsquittung zu übermitteln,
- der Master (M) ferner dazu ausgebildet ist, für den Fall, dass der Master (M) während des zweiten Zeitintervalls die zweite Slave-Synchronisationsquittung empfangen hat, einen synchronisierten Master-Zyklus zu starten,
- der Master (M) ferner dazu ausgebildet ist, für den Fall, dass der Master während eines dritten Zeitintervalls jeweils die weitere Slave-Synchronisationsquittung empfangen hat, zunächst jeweils eine dritte Master-Synchronisationsanforderung dem Slave (S) zu übermitteln und anschließend jeweils einen synchronisierten Masterzyklus zu starten,
- der Slave (S) ferner dazu ausgebildet ist, für den Fall, dass der Slave (S) während eines dritten Zeitintervalls jeweils die dritte Master-Synchronisationsanforderung empfangen hat, zunächst jeweils einen weiteren synchronisierten Slave-Zyklus zu starten und anschließend jeweils die dritte Slave-Synchronisationsquittung dem Master (M) zu übermitteln.

9. Peripheriesystem nach Anspruch 8, **dadurch gekennzeichnet, dass** der Slave (S) dazu ausgebildet ist, den unsynchronisierten Slave-Zyklus dann zu starten, falls der Slave (S)
- während des ersten Slave-Zeitintervalls die erste Master-Synchronisationsanforderung oder
- während des zweiten Slave-Zeitintervalls die zweite Master-Synchronisationsanforderung oder
- während des dritten Slave-Zeitintervalls die dritte Master-Synchronisationsanforderung
nicht empfangen hat.

10. Peripheriesystem nach Anspruch 8, **dadurch gekennzeichnet, dass** der Master (M) dazu ausgebildet ist, den unsynchronisierten Master-Zyklus dann zu starten, falls der Master (M)
- während des ersten Master-Zeitintervalls die erste Slave-Synchronisationsquittung oder
- während des zweiten Master-Zeitintervalls die zweite Slave-Synchronisationsquittung oder
- während des dritten Master-Zeitintervalls die dritte Slave-Synchronisationsquittung
nicht empfangen hat.
